# EUROPEAN PATENT SPECIFICATION

(11) **EP 2 824 936 B1**
(45) Date of publication and mention of the grant of the patent: **15.06.2016**
(21) Application number: 14175137.0
(22) Date of filing: 01.07.2014
(51) Int. Cl.: H04N 21/431, H04N 21/442, G06F 3/048, H04N 9/31, H04N 5/445

(54) **Projector, projector control method, and recording medium storing projector control program**
Projektor, Projektorsteuerungsverfahren und Aufzeichnungsmedium mit darauf gespeichertem Projektorsteuerungsprogramm
Projecteur, procédé de commande de projecteur et support d'enregistrement stockant un programme de commande de projecteur

(30) Priority: 10.07.2013 JP 2013144437
(43) Date of publication of application: 14.01.2015
(73) Proprietor: Ricoh Company, Ltd., Tokyo 143-8555 (JP)
(72) Inventor: Watanabe, Ayako, Ohta-ku, Tokyo 143-8555 (JP)
(74) Representative: Maury, Richard Philip

(56) References cited:
- US-A1- 2009 225 235
- US-A1- 2011 109 541
- US-A1- 2011 170 021

## Description

### BACKGROUND

### Technical Field

The present invention relates to a projector, a projector control method, and a recording medium storing a projector control program.

### Background Art

Recently, with projectors, their liquid crystal panels have become high-resolution, their brightness has been improved with high-efficiency lamps, and they have become less expensive. For example, compact and lightweight projectors that adopt a Digital Micro-mirror Device (DMD) have become popular, and those projectors have become widely used not only in workplaces and schools but also in homes. In particular, portability of front type projectors has been improved, and they have come to be used for especially small or ad hoc meetings with only several attendees.

Aside from images input from information processing apparatuses such as personal computers (PCs) connected to the projectors and which the projector projects on a screen, projectors also have an On Screen Display (OSD) function that projects a menu, etc., that enables various operations and settings to be input to the projectors.

On the menu displayed by the OSD function, various settings such as display language, display mode, image adjustment, and power management can be configured manually. In addition, error display screens, etc., are also displayed by the OSD function. Hereinafter, a menu, dialog, or error screen, etc., is referred to as an OSD screen.

Although projectors that can configure where the OSD screen is displayed on the projection image are also known, the OSD screen displayed by the OSD function is generally displayed at a predetermined position (e.g., upper left corner) on the projection image input from the information processing apparatus and projected on the screen.

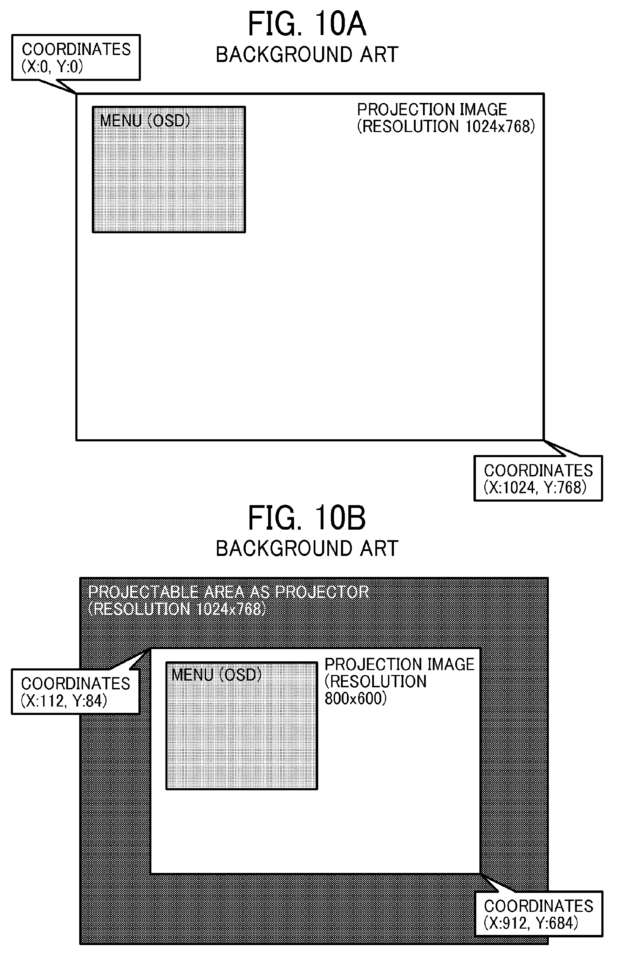

For example, as shown in FIG. 10A, it is assumed that the initial resolution of the projection image is 1024x768, the OSD screen (menu) is displayed in the upper left on the projection screen, and the resolution of the input signal is changed to 800x600. In this case, if the resolution of the input signal is modified and the image projection area of the projection image is modified, some projectors also modify the display area of the OSD screen accordingly. For example, a projector that modifies the display position of the menu so that the menu fits into the projection image after the correction in case of correcting keystone distortion of the input image is known (e.g., JP-2005-323389-A). In other cases, the display area of the OSD screen is modified when the coordinates of the projection image are modified, such as modifying the aspect setting, etc.

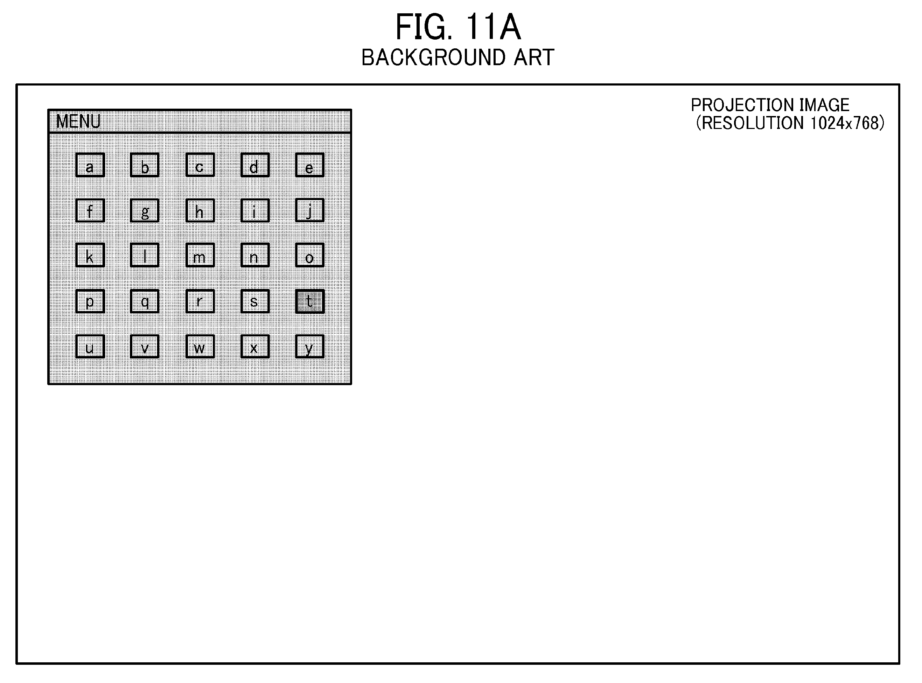

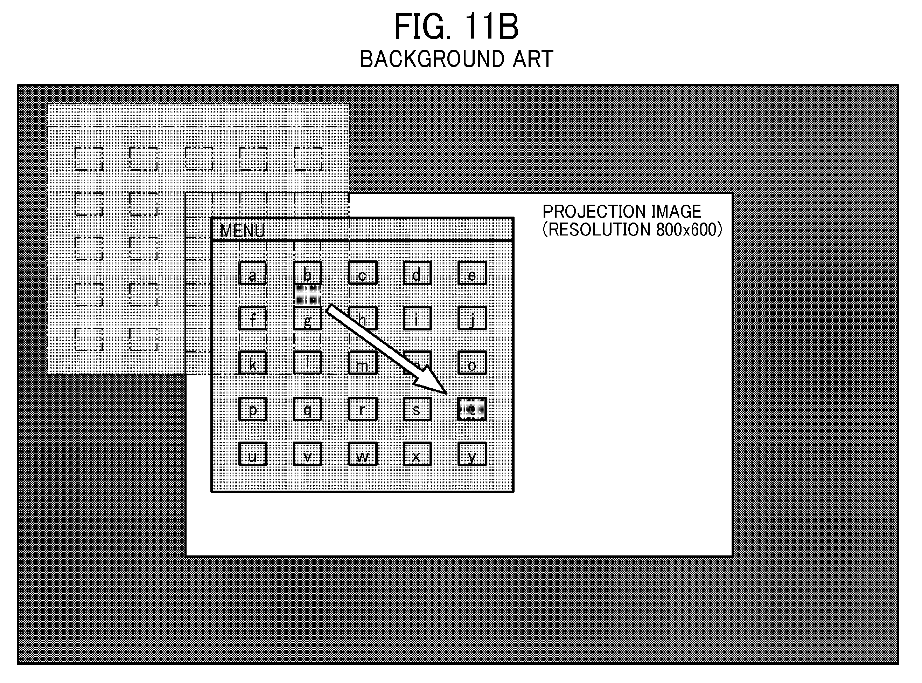

As shown in FIG. 11A, when the menu is displayed by the OSD function and a predetermined option (option t) in the menu is selected, generally the selected option is displayed in a highlighted or inverted way so that it can be distinguished from other unselected options. Subsequently, as shown in FIG. 11B, if the image projection area is modified by modifying resolution of the input signal, etc., and the display position of the menu is modified, the position of the selected option (option t) moves as indicated by the white arrow in FIG. 11B.

In this case, as shown in FIGS. 11A and 11B, if the displacement of the selected option is large and the selected option moves quickly from the position where the user was looking, it is impossible to recognize the new position of the selected option after the variation immediately.

Especially, in case one user is selecting a menu option using a remote control, if another user modifies the resolution of the input signal it is possible that the user who selects the option in the menu loses sight of the selected option.

In the technology described in JP-2005-323389-A, although the menu fits into the projection area after the correction, there is no discussion of the issue of relocation of the selected option in the menu as described above or of a solution thereto.

In view of the above, in case a selected option is displayed highlighted in an OSD screen such as the menu and the projection area of a projector is modified, there is a need for a projector that can keep the displacement of the selected option to a minimum is provided, and it is possible to distinguish the selected option in the projection area after the modification without losing sight of the selected option.

US2011/017002A discloses displaying a menu by an OSD function in a projector and adjusting it according to variations in the main image.

The invention is in the projector of Claim 1 and the method of Claim 6.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a schematic diagram illustrating an image projection system as an embodiment of the present invention.
FIG. 2 is a block diagram illustrating a configuration of a projector as an embodiment of the present invention.
FIG. 3 is a block diagram illustrating a configuration of a main board in the projector as an embodiment of the present invention.
FIGS. 4A, 4B and 4C are sequence charts illustrating a process executed by the projector.
FIGS. 5A and 5B are flowcharts illustrating a process executed by the projector.
FIG. 6 is a table illustrating component information before modifying the image area.
FIG. 7 is a table illustrating component information after modifying the image area.
FIG. 8 is a table illustrating component information after modifying the image area and adjusting the coordinates.
FIG. 9A is a diagram illustrating the menu that an option t is selected before modifying the image area, and FIG. 9B is a diagram illustrating the menu that the coordinates of the selected option t are adjusted after modifying the image area.
FIG. 10A is a diagram illustrating the menu before modifying the image area, and FIG. 10B is a diagram illustrating the menu after modifying the image area
FIG. 11A is a diagram illustrating the menu that the option t is selected before modifying the image area, and FIG. 11B is a diagram illustrating the menu that the display position of the selected option t varies after modifying the image area.

### DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

In the following embodiment, in case a selected option is displayed highlighted in an OSD screen such as the menu and the projection area of a projector is modified, a projector that can keep the displacement of the selected option to a minimum is provided, and it is possible to distinguish the selected option in the projection area after the modification without losing sight of the selected option.

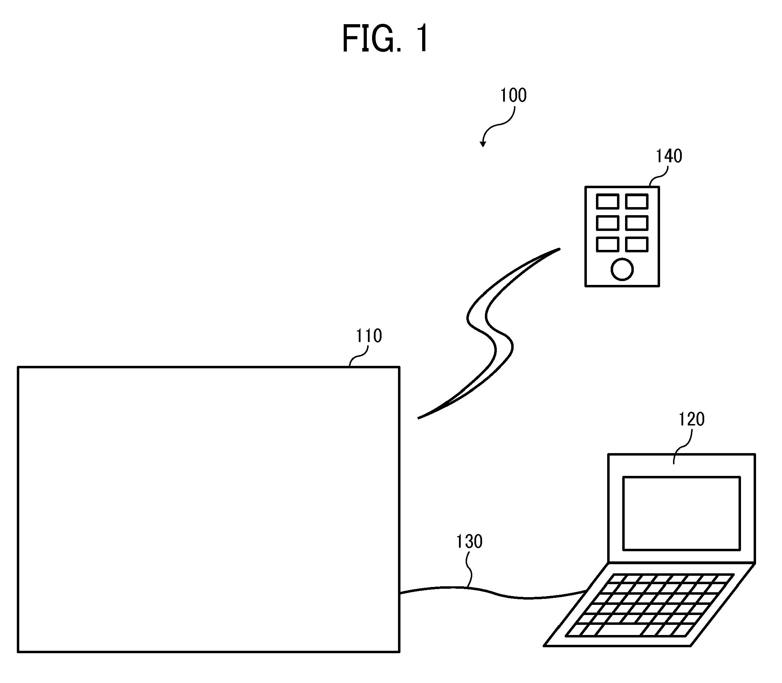

FIG. 1 is a schematic diagram illustrating an image projection system 100. The image projection system 100 includes a projector 110 and a video source apparatus 120, and the projector 110 is connected to the video source apparatus 120 via a cable 130.

As described in detail below, the projector 110 in this embodiment generates the projection image based on the video signal and projects the projection image on the projection surface. The projector 110 includes a superimposed image projection unit (main controller 300, OSD generator 301, and projection unit 303) that superimposes a predetermined superimposed screen (OSD screen) on the generated projection image based on the video signal and projects the projection image and a signal control unit (signal controller 304) that detects variation of a projection area of the projection image based on the video signal. The superimposed image projection unit modifies the projection position of the superimposed image in accordance with the fluctuation of the projection area if the signal controller detects the fluctuation of the projection area of the projection image (e.g., change of screen resolution), generates a superimposed image that a display position of a part selected in the superimposed image before modifying and displayed differently from other parts is adjusted based on amount of variation of the projection position of the superimposed image along with the fluctuation, and the generated superimposed image is projected as the superimposed image after being modified.

The projector 110 projects an image provided by the video source apparatus 120 on a projection surface such as a screen etc. The projector 110 projects an OSD screen (superimposed screen) such as a menu configurable manually along with the image provided by the video source apparatus 120. It should be noted that the OSD screen can be projected even if the video source apparatus 120 does not provide images. In addition, the projector 110 receives operation requests from a remote control 140 and performs various operations that implements functions that the projector 110 includes.

The projector 110 includes video input ports such as a D-Sub connector as a Video Graphics Array (VGA) input port, a High-Definition Multimedia Interface (HDMI) port, a S-Video port, and a RCA port as interfaces for inputting video signals and receives the video signal from the video source apparatus 120 via the cable 130 connected to those ports.

Alternatively, the projector can receive the video signal from the video source apparatus 120 using wireless communication in conformity with wireless communication protocols such as Bluetooth and Wi-Fi etc.

The video source apparatus 120 provides images that the projector 110 projects. The image providing apparatus 120 includes interfaces to output video signals and transfers the video signal that forms display images of the video source apparatus 120 to the projector 110 at a predetermined transfer rate (e.g., from 30 frame per second (fps) to 60 fps).

The video source apparatus 120 also includes video output ports such as a VGA output port, the HDMI port, the S-Video port, and the RCA port as interfaces for outputting video signals and transfers the video signal to the projector 110 via the cable 130 connected to those ports.

In addition, the video source apparatus 120 can transfer the video signal to the projector 110 using wireless communication.

For example, a notebook PC (information processing apparatus) can be used as the video source apparatus 120. In addition, the information processing apparatus that can provide the video signals such as a desktop PC, a tablet PC and a PDA can be adopted as the video source apparatus 120. In FIG. 1, while one video source apparatus 120 is connected to the projector 110, two or more video source apparatus 120 can be connected to the projector 110.

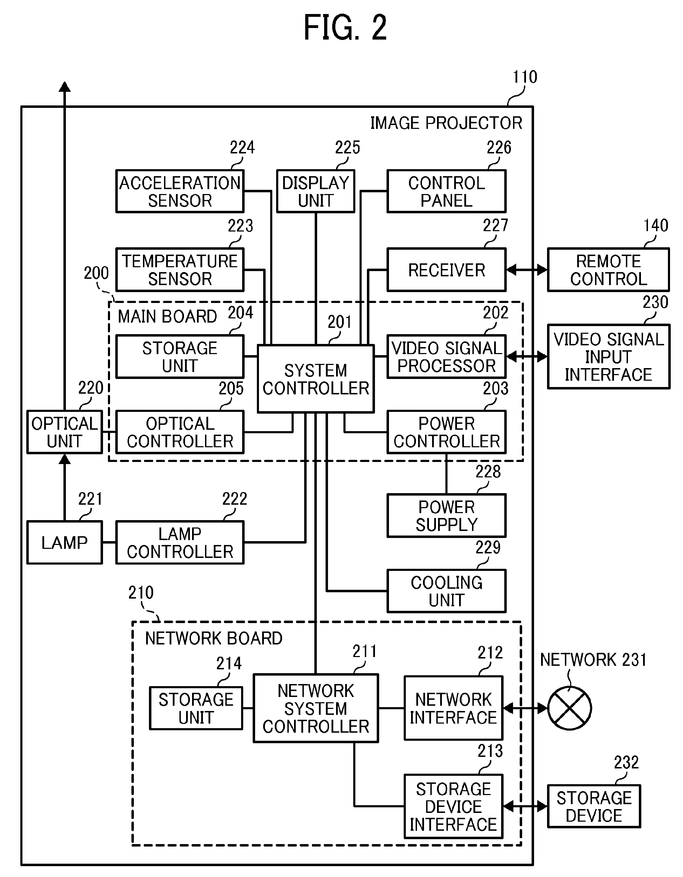

FIG. 2 is a block diagram illustrating a configuration of the projector 110 in this embodiment. The projector 110 includes a main board 200, a network board (expansion board) 210, an optical unit 220, a lamp (light source) 221, a power supply 228, and a video signal input interface 230.

The main board 200 is a printed-circuit board that controls the projector 110. The main board 200 includes a system controller 201, a video signal processor 202, a power supply controller 203, a storage device 204, an optical controller 205 and can be configured using integrated circuits that implement the functional units described above such as Application Specific Integrated Circuit (ASIC) etc.

The system controller 201 controls the projector 110. The system controller 201 is connected to the video signal processor 202, the power supply controller 203, the storage device 204, and the optical controller 205 via a bus and controls each of these functional units.

The video signal processor 202 processes the video signal that the video source apparatus 120 provides. The video processor 202 receives the video signal via the video signal input interface 230 and performs various processes such as serial-parallel conversion and voltage level conversion etc.

The power supply controller 203 controls the power supply 228 that supplies electric power to the projector 110. The power supply controller 203 turns on and off the power supply 228 under the control of the system controller 201.

The storage device 204 is nonvolatile memory that stores various data that the system controller 201 processes. Various nonvolatile semiconductor memory devices including EPROM, EEPROM, and flash memory can be adopted as the storage device 204.

The optical controller 205 controls the optical unit 220 that forms the video. The optical controller 205 supplies the image data that the system controller 201 generates to the optical unit 220 and forms the video of the image data. The optical unit 220 forms the video of the image data projects the image data on the projection surface by illuminating the optical unit 220 with the light generated by the lamp 221. If the projector 110 is a liquid crystal projector, it is possible to adopt a liquid crystal as the optical unit 220. If the projector 110 is a Digital Light Processing (DLP) projector, it is possible to adopt a DMD or a color wheel as the optical unit 220.

The lamp controller (light source controller) 222 controls the lamp 221 and adjust the amount of light of the lamp 221 under the control of the system controller 201. It is possible to use a high-pressure mercury vapor lamp etc. as the lamp 221.

The network board 210 is a printed-circuit board that controls network communication and an external storage device. The network board 210 includes a network system controller 211, a network interface 212, a storage device interface 213, and a storage unit 214, and the network board 210 can be configured by integrated circuits such as ASIC that implements the function.

The network system controller 211 controls communication via the network 231 and the storage device 232. The network system controller 211 is connected to the network interface 212, the storage device interface 213, and the storage unit 214 via a bus.

The network interface 212 communicates data via the network 231. The network interface 212 provides the data received from the network 231 to the network system controller 211 and sends the data received from the network system controller 211 to the network 231. The network interface 212 includes a port that can be connected to a network cable such as a LAN cable etc. and performs wired communication via the network cable. The network interface 212 also includes a wireless communication function such as Bluetooth and Wi-Fi and performs data communication by wireless communication.

The storage device interface 213 is an interface that connects to the portable storage device 232 such as a USB memory. The storage device interface 213 acquires image data such as an image and video and provides it to the network system controller 211.

The storage unit 214 is a nonvolatile memory that stores various data processed by the network system controller 211. In this embodiment, it is possible to adopt various nonvolatile semiconductor memory devices, such as EPROM, EEPROM, and flash memory, etc., as the storage unit 214.

In addition, the projector 110 includes a thermal sensor 223, an acceleration sensor, a display unit 225, an operational unit (main unit keys) 226, a receiver 227, and a cooling device 229, and these functional units are connected to the system controller 201 via a bus.

The thermal sensor 223 detects temperature of the projector 110. The thermal sensor 223 reports the detected temperature to the system controller 201.

The acceleration sensor 224 detects acceleration of the projector 110. The acceleration sensor 224 reports the detected temperature to the system controller 201

The display unit 225 displays various information, and the display unit 225 is comprised of a LED indicator and a liquid crystal panel. The display unit 225 displays information to be displayed received from the system controller 201 on the LED indicator and the liquid crystal panel.

The operational panel 226 accepts various operational requests manually and comprises key buttons (main unit keys) etc. laid out on the outside surface of the projector 110. The operational requests include a request to modify aspect ratio of the projected video, a request to turn off the projector 110, a request to change the lamp power to adjust the amount of light of the light source, a request to switch input that changes the image providing apparatus whose display image is to be projected if the multiple image providing apparatuses are connected, a request to change a video mode that changes quality of the projected video (e.g., bright, standard, and natural), a request to freeze that pauses the video to be projected, a request to change input type as type of port from which the image to be projected is acquired, a request to display the main menu or the sub-menu, a request to modify aspect ratio, and a request to close the sub-menu. After accepting the operational request, the operational unit 226 reports the operational request to the system controller 201.

The receiver 227 receives an operational signal from the remote control 140. After receiving the operational signal, the receiver 227 reports the operational signal to the system controller 201.

The cooling device 229 cools down the projector 110 and is comprised of components such as a cooling fan, etc. The cooling device 229 is driven under the control of the system controller 201 and cools down the projector 110.

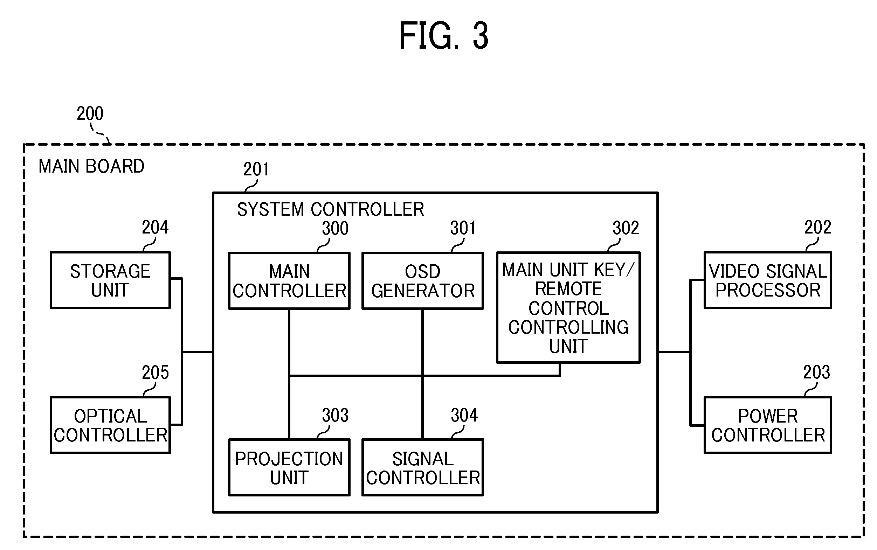

FIG. 3 is a block diagram illustrating a configuration of the main board 200 included in the projector 110.

As described above, the system controller 201 includes the main controller 300, the OSD generator 301, the main unit key/remote control controlling unit 302, the projection unit 303, and the signal controller 304.

The main controller 300 controls the system controller 201. The main controller 300 controls the system controller 201 and functional units described above.

The OSD generator 301 generates OSD screens such as menus, dialog boxes, message windows, icons, and help menus that the main board 200 generates. The OSD generator 301 reads menu settings information displayed on the main menu from the storage device 204 and generates the main menu that reflects the menu settings information. The OSD generator 301 transfers a video signal that forms the main menu to the projection unit 303.

The main unit key/remote control controlling unit 302 accepts various operational requests from the operational unit 226 and the remote control 140 and reports the operational request that corresponds to each operational request.

The projection unit 303 projects image data by controlling the optical controller 205. The projection unit 303 transfers a video signal that forms an image received from the image providing apparatus 120, a video signal that forms the menu etc. acquired from the OSD generator 301, and a video signal that forms a sub-menu acquired from the network board 210 to the optical controller 205 and projects those image data.

The main controller 300, the OSD generator 301, and the projection unit 303 function as a superimposed image projection unit that superimposes the OSD screen (superimposed screen) on the generated projection screen based on the video signal and projects the superimposed image.

If the projector 110 includes the network board 210, a network board interface that performs data communication between the main board 200 and the network board 210. The network board interface transfers a request to display the sub-menu and close the sub-menu to the network board 210 and receives a response signal to these requests and a video signal that forms the sub-menu from the network board 210.

The signal controller 304 functions as a signal controlling unit and determines the input video signal. That.is, if the video signal includes a modified image area (projection area), the signal controller 304 determines an image area that corresponds to the modified video signal. A process that modifies the image area means a process that changes coordinates of the projection image. Examples of that kind of process are changing resolution, changing an input type, adjusting keystone distortion, changing an aspect, and zooming in/out etc.

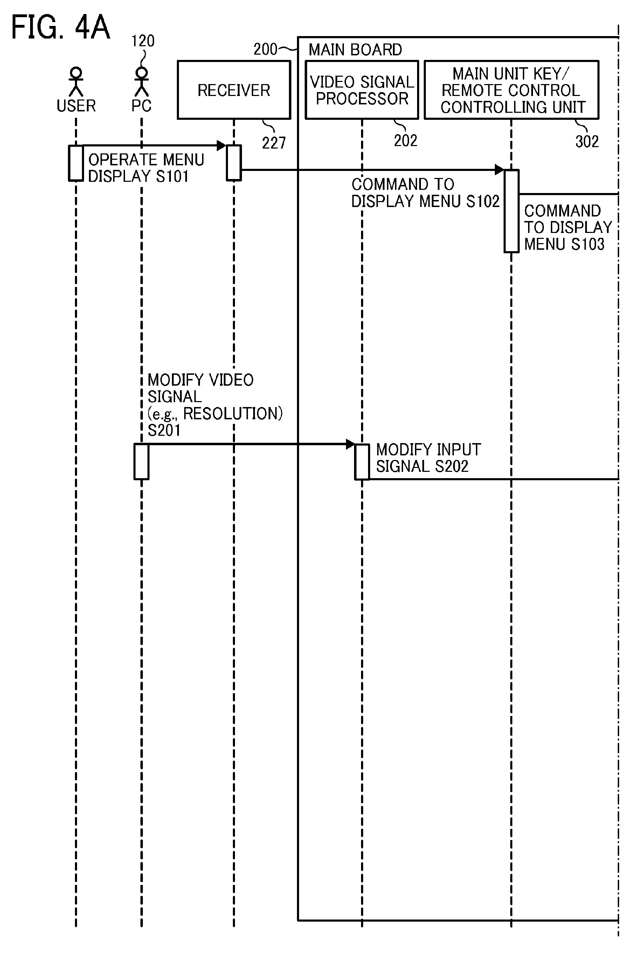

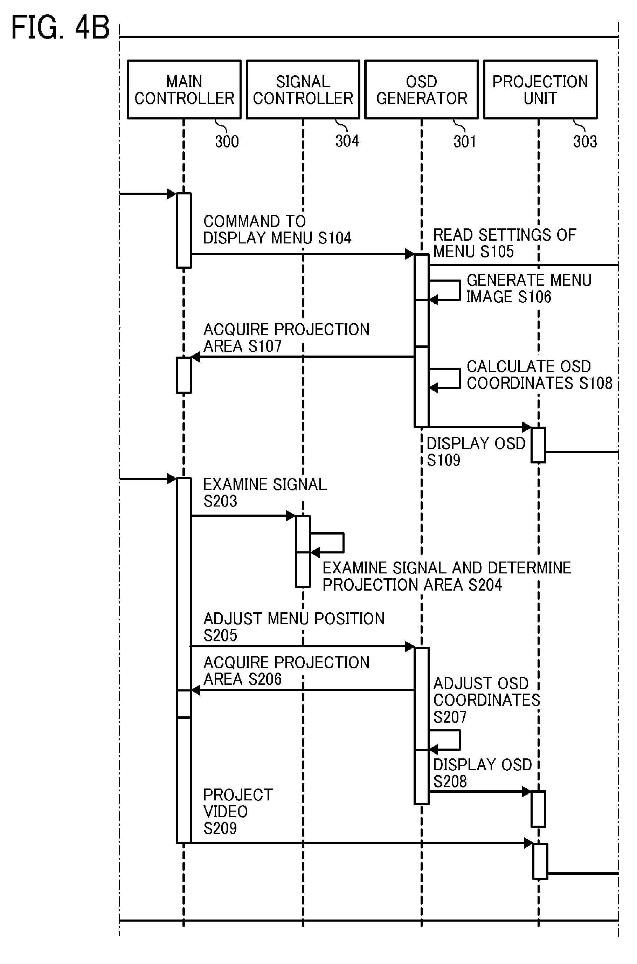

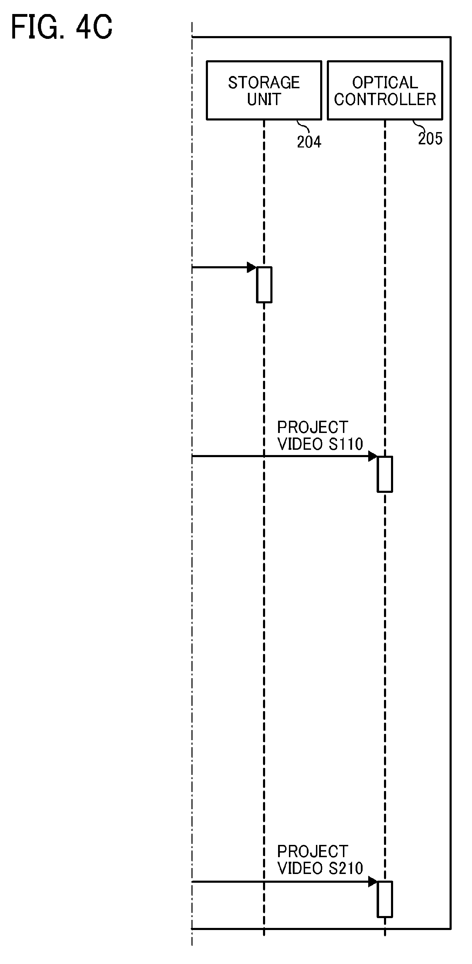

FIGS. 4A, 4B and 4C are sequence charts illustrating a process executed by the projector 110.

How the OSD screen (e.g., a menu) is displayed after projecting the video from the video source apparatus (PC) 120 is described below. First, an operation to display the menu is performed by pressing the menu button on the remote control 140 or the operational unit 226 manually in S101 (operation to display the menu).

Next, the receiver 227 transfers content of the operation to the main unit key/remote control controlling unit 302 in S 102 (instructing to display the menu), and the main unit key/remote control controlling unit 302 transfers the instruction to display the menu to the main controller 300 in S103 (instructing to display the menu).

The main controller 300 instructs the OSD generator 301 to display the menu using the predetermined menu settings in S104 (instructing to display the menu).

The OSD generator 301 acquires the projected image area from the main controller 300 in S107 (acquiring the projection area) and calculates coordinates of each component in the OSD screen (e.g., options and icons) from the coordinates of the image area in S108 (calculating the OSD coordinates).

The step of calculating the OSD coordinates in S108 is described in detail below. All components in the OSD screen hold coordinate positions (points of origin) if the image area starts at (x:0, y:0), e.g., the resolution is 1024x768, as their coordinate positions. For example, the coordinate position for a component A is held as (x:50, y:50). In addition, sizes of each component are predetermined.

Therefore, if the image area starts at coordinates larger than (x:0, y:0), e.g., the image area starts at (x:112, y:84) in case the resolution is 800x600, the coordinate position for the component A becomes (x:50+112, y:50+84) = (x:162, y, 134).

Next, the OSD generator 301 transfers the menu image to the projection unit 303 in S109 (displaying the OSD), and the projection unit 303 transfers a video signal for the menu image to the optical controller 205. After receiving the video signal, the optical controller 205 projects the video signal in S110 (projecting the video). As described above, on the projection surface where the video from the video providing apparatus 120 is projected, it is possible to project the OSD screen corresponding to the image area of the video. How the coordinate positions are adjusted is described in detail below.

Next, in displaying the OSD screen (e.g., the menu), a process when the image area is modified is described below.

First, if the video providing apparatus 120 instructs to modify the resolution etc. and the video signal is modified, the video signal processor 202 receives the video signal from the video providing apparatus 120 in S201 (modifying the video signal).

The video signal processor 202 transfers the video signal to the main controller 300 in S202 (modifying the input signal). After receiving that, the main controller 300 instructs the signal controller 304 to examine the signal in S203 (examining the signal).

The signal controller 304 examines the modified video signal and determines the projection area that corresponds to the resolution of the modified video signal in S204 (examining the signal and determining the projection area (signal controlling process)).

Next, the main controller 300 instructs the OSD generator 301 to adjust the display position of the menu in S205 (adjusting the menu position). After receiving the instruction, the OSD generator 301 acquires the projection area from the main controller 300 in S206 (acquiring the projection area).

Next, the OSD generator 301 adjusts the coordinates of the menu in S207 (adjusting the OSD coordinates) and transfers the menu to the projection unit 303 in S208 (displaying the OSD). The steps in S207 and S208 are described in detail later.

After receiving that, the main controller 300 instructs the projection unit 303 to display the video in S209 (projecting the video), and the projection unit 303 transfers the video signal of the menu image to the optical controller 205. After receiving that, the optical controller 205 projects the video signal in S210 (projecting the video). As described above, even in the case that it is instructed to modify the resolution etc. and the image area of the projection image is modified, it is possible to display the menu adjusted to the coordinate positions appropriate to the modified image area.

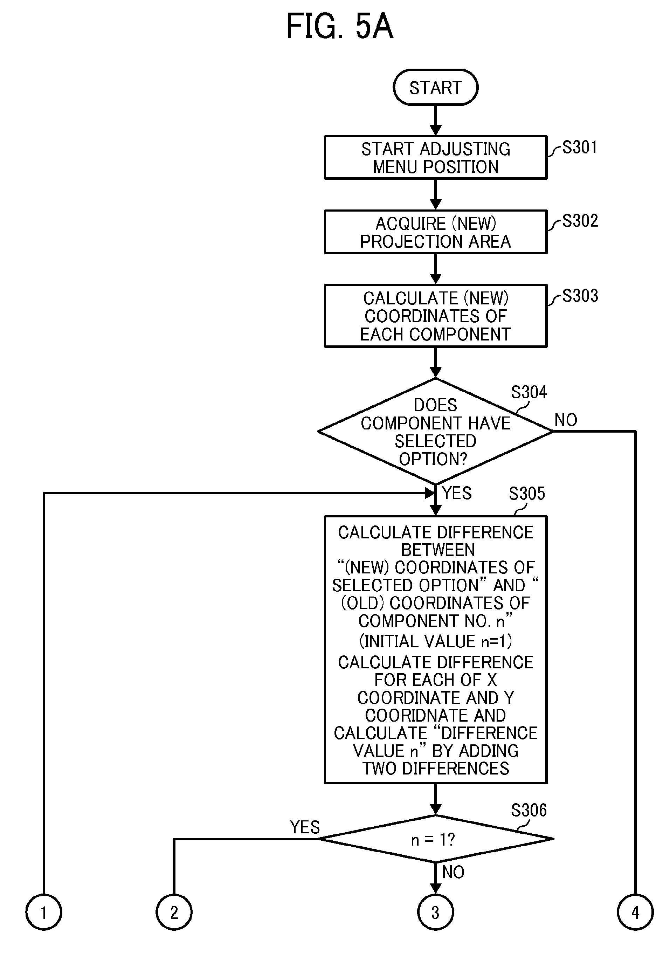

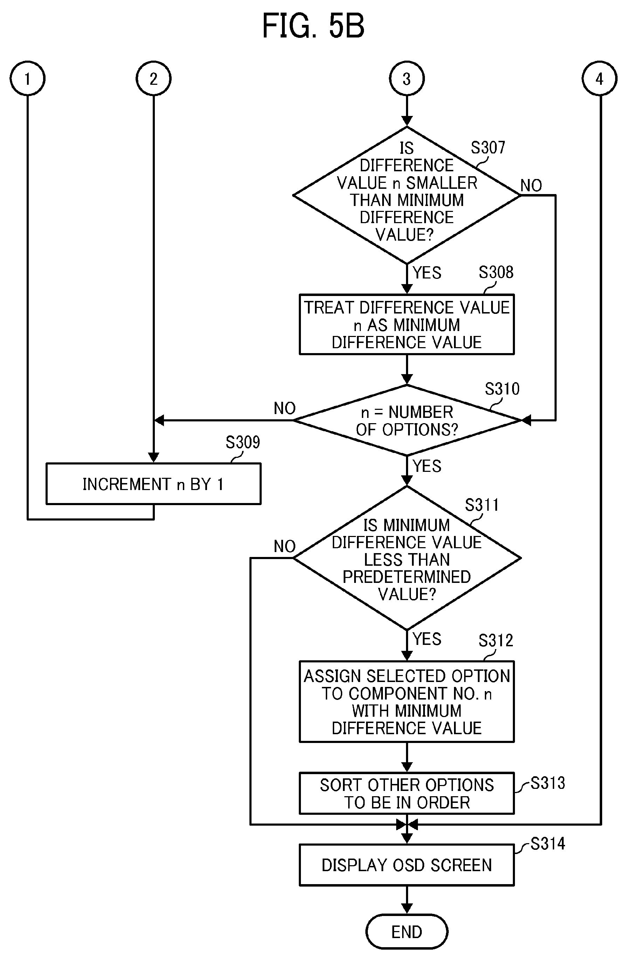

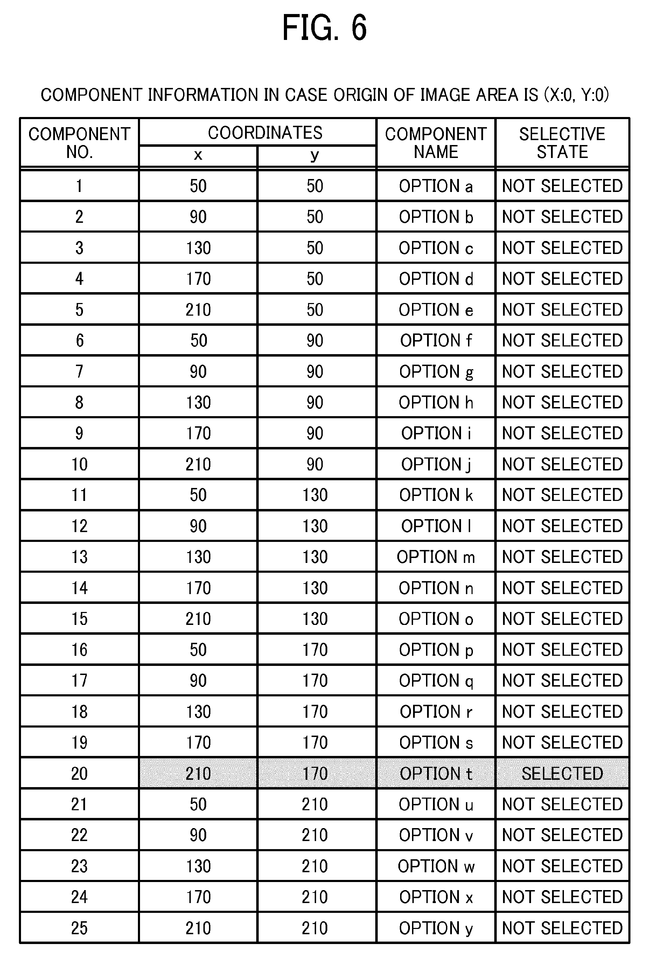

FIGS. 5A and 5B are flowcharts illustrating steps from S205 to S208 (projecting the superimposed image) shown in FIG. 4 in detail. How the coordinates in the OSD screen are adjusted in modifying the image area is described below in detail with reference to the flowchart shown in FIG. 5. FIGS. 6, 7, and 8 are tables illustrating component information such as coordinates of the components that comprise the OSD screen.

FIG. 6 is a table illustrating component information in the case that the maximum projectable resolution is 1024x768, the origin of the image area (the upper left corner) is (x:0, y:0), and the endpoint of the image area (the lower right corner) is (x:1024, y:768). The OSD generator 301 stores the component information table.

The component information table includes fields such as coordinates (origin), allocated name of component (option from a to y), and information that indicates whether or not the component is selected if the component is the option (hereinafter referred to as "selection information") for components that comprise the OSD screen (the components from No. 1 to No. 25) and holds each information.

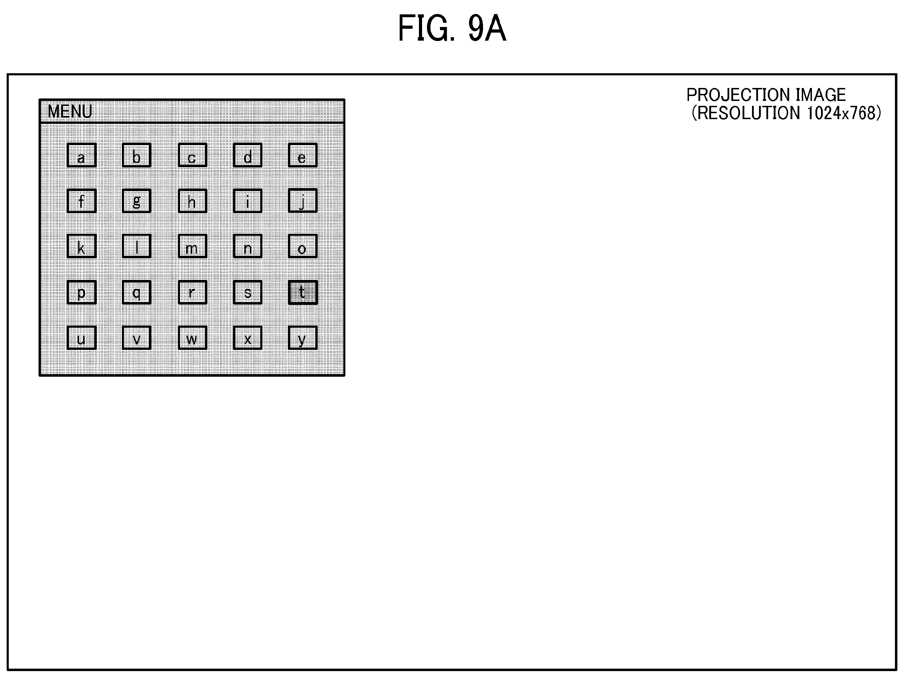

FIG. 9A is a diagram illustrating the menu that an option t is selected and highlighted OSD-displayed on the upper left of the projection image whose resolution is 1024x768. In this case, as shown in FIG. 6, in the component information table, the option t corresponds to the component No. 20, and its selective status indicates "selected".

After receiving the instruction to adjust the menu position in S301 (S205), a new image area is acquired from the main controller 300 in S302 (S206). The origin of the new image area (its resolution is 800x600) is (x:112, y:84), and the endpoint is (x:912, y:684).

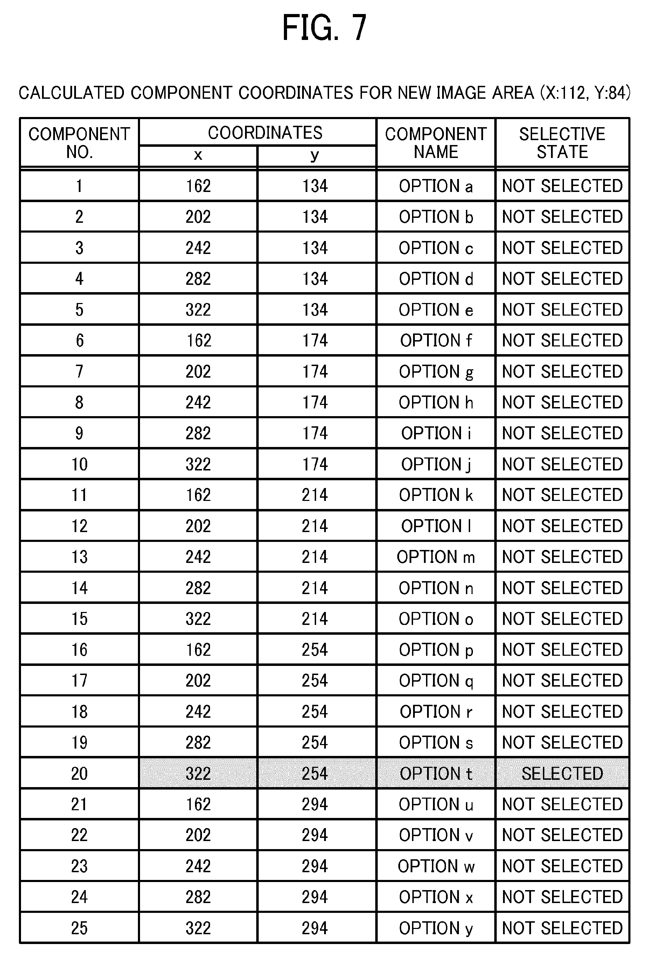

FIG. 7 is a table illustrating component information in the case that the maximum projectable resolution is 800x600, the origin of the image area is (x:112, y:84), and the endpoint of the image area is (x:912, y:684).

The OSD generator 301 calculates new coordinates of the components in the modified image area in S303. Here, the coordinates of the components after modifying can be calculated by adding the coordinates of the origin to the coordinates of the components shown in FIG. 6. For example, the coordinates of the component No. 1 (option a) can be calculated as (x:50+112, y:50+84) = (x:162, y:134), and the coordinates of the component No. 2 can be calculated as (x:90+112, y:50+84) = (x:202, y:134).

Here, if there is a component whose selective status is "selected", that is, if there is a selected option (YES in S304), the coordinates of the option is adjusted in S305 to S313. If there is no selected option (NO in S304), the OSD screen is displayed based on the component information table shown in FIG. 7.

How the coordinates of the selected option is adjusted is described in detail below. First, all differences between the old coordinates of the selected option shown in FIG. 6 and the new coordinates of the components shown in FIG. 7 are calculated in S305 to S310. In calculating the differences, the differences in each of x coordinate and y coordinate are calculated, and a value that adds the two absolute values is calculated as "a difference". Among those differences, the minimum difference is considered as "the minimum difference".

For example, the difference between the old coordinates (x:210, y:170) of the selected component (component No. 20, option t) shown in FIG. 6 and the new coordinates of the components shown in FIG. 7 are calculated below.

In the case of the component No. 1, since its coordinates are calculated as (x:210-162, y:170-134) = (x:48, y:44), the difference is indicated as |48|+|44| = 92.

Similarly, in the case of the component No. 2, since its coordinates are calculated as (x:210-202, y:170-134) = (x:8, y:44), the difference is indicated as |8|+|44| = 52.

Likewise, the differences can be calculated for the remaining components. For example, in the case of the component No. 7, since its coordinates are calculated as (x:210-202, y:170-174) = (x:8, y:-4), the difference is indicated as |8|+|-4| = 12.

Lastly, in the case of the component No. 25, since its coordinates are calculated as (x:210-322, y:170-294) = (x:-112, y:-124), the difference is indicated as |-112|+-124| = 236.

In the case shown in FIGS. 6 and 7, the minimum difference is 12 for the component No. 7.

Next, it is preferable to determine whether or not the calculated minimum difference is equal to or less than a predetermined threshold value (e.g., 100) in S311. In this step, in case the new coordinates are away from the old coordinates even if the difference is minimal among the options (NO in S311), since its displacement becomes large and it is not suitable to the purpose not to lose sight of the selected option, the coordinates of the selected option are not adjusted. The optimal threshold value can be predetermined depending on the design of the OSD screen. In addition, it is preferable that the threshold value can be configured manually.

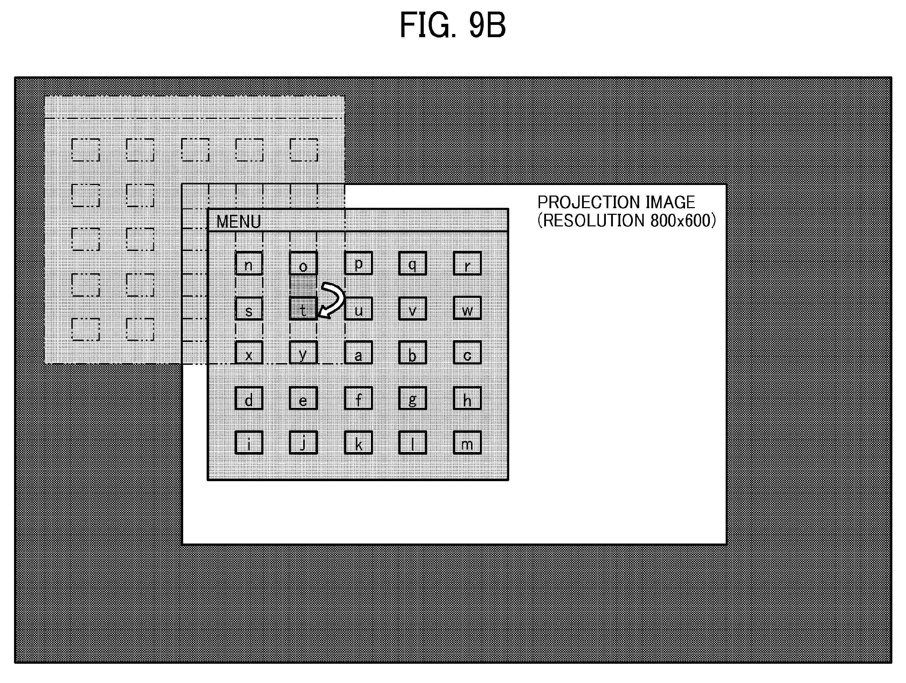

If the minimum difference is equal to or less than the predetermined threshold value (YES in S311), as shown in FIG. 9B, the selected option (option t) is allotted to the component with the minimum difference (component No. 7) in S312.

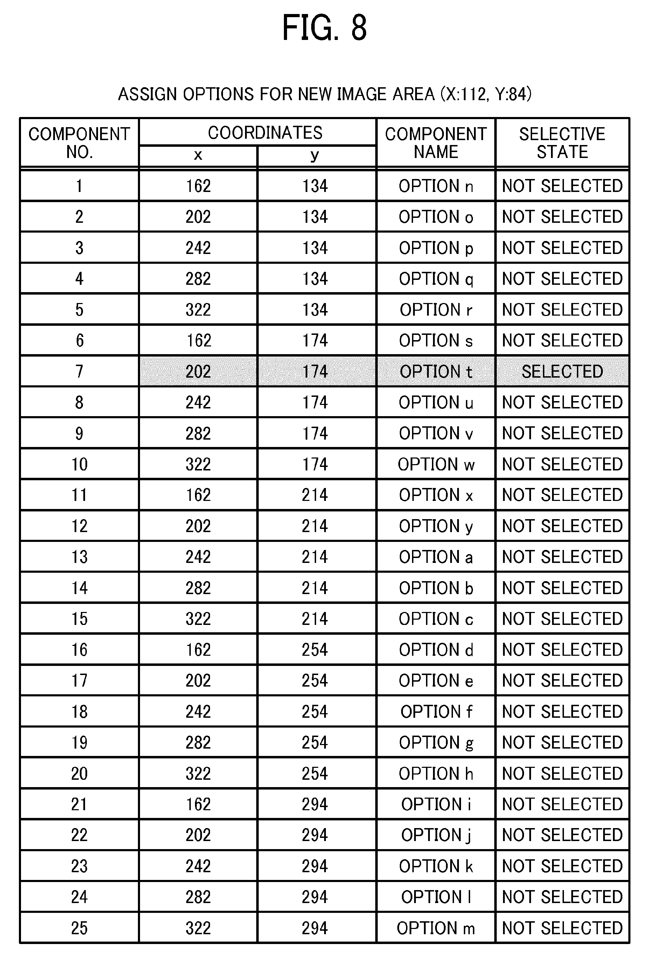

Regarding other options, it is preferable that the other options are sorted and displayed so that the order of the other options from the upper left (options from a to y) shown in FIG. 9A is maintained in S313. That is, as shown in FIG. 8, the option t is allotted to the component No. 7, the option u is allotted to the component No. 8, and the option m is allotted to the component No. 25 sequentially. Subsequently, the order returns to the upper left, the option n is allotted to the component No. 1, and the option s is allotted to the component No. 6. Accordingly, as shown in FIG. 9B, the coordinates for the options are adjusted. As described above, by maintaining the order of the options, it is possible that the user does not lose sight of the selected option.

In the embodiment described above, the coordinates of the selected option are adjusted to the position where the displacement is minimal. However, that is an example, and it is possible to perform the adjustment that is easy to be recognized by the user. For example, in case the option t is selected as shown in FIG. 9, if the image area is modified, it is possible to maintain the option column that includes the option t in the menu (options p, q, r, s, and t) (i.e., x axis remains as is) and adjust the y axis only (i.e., sorting in units of columns). By contrast, it is possible to maintain the option row that includes the option t in the menu (options e, j, o, t, and y) (i.e., y axis remains as is) and adjust the x axis only (i.e., sorting in units of rows).

In the embodiment described above, the position of the allotted selected option is determined based on the difference of the coordinates between before modifying and after modifying and the minimum difference as the calculation of the displacement of the selected option between before modifying and after modifying. However, that is an example, and the way of calculating the displacement is not limited to that.

In the embodiment described above, the button options from a to y are set in array on the menu as shown in FIG. 9. However, if the menu is displayed using bars, it is possible to adjust the coordinates so that the displacement of the selected bar is minimal.

In the embodiment described above, the options are sorted so that the order of the options is maintained in S313. However, alternatively it is also possible to sort designated options only. For example, in the case described above, it is possible to swap the selected option t with the option g nearest after being modified only and display other options as is.

In addition, it is preferable to be able to configure whether or not the adjustment of the coordinates in the OSD screen is enabled in case of modifying the image area.

Numerous additional modifications and variations are possible in light of the above teachings. It is therefore to be understood that, within the scope of the appended claims, the disclosure of this patent specification may be practiced otherwise than as specifically described herein.

For example, the units from 300 to 304 included in the system controller 201 as described above can be configured by running software (control program), e.g., by the CPU on the projector.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

Each of the functions of the described embodiments may be implemented by one or more processing circuits. A processing circuit includes a programmed processor, as a processor includes circuitry. A processing circuit also includes devices such as an application specific integrated circuit (ASIC) and conventional circuit components arranged to perform the recited functions.

## Claims

1. A projector (110), comprising:
a superimposed image projection unit (300, 301, 303) configured to project a projection image generated based on a video signal, the projection image having a predetermined superimposed image superimposed thereon, wherein the superimposed image comprises an array of representations of user-selectable options (a - y in Figs. 9A and 9B) each being indicative of whether it has been selected; and
a signal controller (304) configured to detect variation in the projection area of the projection image based on the video signal;
wherein the superimposed image projection unit (300, 301, 303) is configured to modify the projection position of the superimposed image in accordance with the variation in the projection area of the projection image detected by the signal controller (304), and to reorder the positions of the representations of the user-selectable options in the array, as part of the process of modifying the projection position of the superimposed image, such as to minimize the displacement of a selected one of the options from its original position to its modified position in the projection image.

2. A projector according to claim 1, wherein the array comprises rows and columns of the representations, and the superimposed image projection unit (300, 301, 303) is configured to reorder the positions of the representations by sorting in units of rows or columns.

3. A projector according to claim 1, wherein the superimposed image projection unit (300, 301, 303) is configured to sort the representations of the non-selected options so that the order of all the options, from the upper left to the lower right of the array, is maintained.

4. A projector according to any one of claims 1 to 3, wherein the superimposed image projection unit (300, 301, 303) is configured to modify the projection position and to minimize the displacement of the selected option based on coordinate positions in the projection image.

5. A projector (110) according to any one of claims 1 to 4, wherein the signal controller (304) is configured to detect the variation in the projection area of the projection image in response to modifying the resolution of the projection image, modifying the aspect ratio of the projection image, or zooming the projection image.

6. A method of controlling a projection image, comprising the steps of:
projecting a projection image generated based on a video signal, the projection image having a predetermined superimposed image superimposed thereon, wherein the superimposed image comprises an array of representations of user-selectable options (a - y in Figs. 9A and 9B) each being indicative of whether it has been selected;
detecting variation in a projection area of the projection image based on the video signal;
modifying a projection position of the superimposed image in accordance with the variation in the projection area of the projection image;
and re-ordering the positions of the representations of the user-selectable options in the array, as part of the process of modifying the projection position of the superimposed image, such as to minimize the displacement of a selected one of the options from its original position to its modified position in the projection image.

7. A computer-readable recording medium storing a program that, when executed by a projector (110), causes the projector (110) to perform the image projection control method of claim 6.

## Patentansprüche

1. Projektor (110), umfassend:
eine ein überlagertes Bild projizierende Projektoreinheit (300, 301, 303), welche zum Projizieren eines Projektionsbildes konfiguriert ist, basierend auf einem Videosignal, wobei das Projektionsbild ein darauf überlagertes vorbestimmtes überlagertes Bild aufweist, wobei das überlagerte Bild eine Anordnung von Darstellungen von benutzerauswählbaren Optionen (a - y in den Figuren 9A und 9B) umfasst, wobei jede Option anzeigt, ob sie ausgewählt worden ist; und
eine Signalsteuerung (304), welche zum Erfassen von Änderungen im Projektionsbereich des projizierten Bildes auf der Basis des Videosignals konfiguriert ist;
wobei die ein überlagertes Bild projizierende Projektoreinheit (300, 301, 303) zum Verändern der Projektionsposition des überlagerten Bildes gemäß der von der Signalsteuerung (304) erfassten Änderung im Projektionsbereich des projizierten Bildes und zum Umordnen der Positionen der Darstellungen der benutzerauswählbaren Optionen in der Anordnung konfiguriert ist, als Teil des Vorgangs des Veränderns der Projektionsposition des überlagerten Bildes, um so die Verlagerung einer ausgewählten der Optionen, aus ihrer Ausgangsposition bis zu ihrer geänderten Position im Projektionsbild, zu minimieren.

2. Projektor nach Anspruch 1, wobei die Anordnung Reihen und Spalten der Darstellungen umfasst, und die ein überlagertes Bild projizierende Projektionseinheit (300, 301, 303) zum Umordnen der Positionen der Darstellungen, durch Sortieren in Einheiten von Reihen oder Spalten, konfiguriert ist.

3. Projektor nach Anspruch 1, wobei die ein überlagertes Bild projizierende Projektionseinheit (300, 301, 303) zum Sortieren der Darstellungen der nicht ausgewählten Optionen konfiguriert ist, um so die Ordnung aller Optionen, von oben links nach unten rechts in der Anordnung, zu behalten.

4. Projektor nach einem der Ansprüche 1 bis 3, wobei die ein überlagertes Bild projizierende Projektionseinheit (300, 301, 303) zum Ändern der Projektionsposition und zum Minimieren der Verlagerung der ausgewählten Option auf der Basis von Koordinatenpositionen im Projektionsbild konfiguriert ist.

5. Projektor (110) nach einem der Ansprüche 1 bis 4, wobei die Signalsteuerung (304) zum Erfassen der Änderung des Projektionsbereiches des Projektionsbildes als Reaktion auf eine Änderung der Auflösung des Projektionsbildes, auf eine Änderung des Seitenverhältnis des Projektionsbildes oder auf ein Zoomen des Projektionsbildes konfiguriert ist.

6. Verfahren zum Steuern eines Projektionsbildes, umfassend die Schritte:
Projizieren eines Projektionsbildes, welches auf der Basis eines Videosignals erzeugt wird, wobei das Projektionsbild ein darauf überlagertes vorbestimmtes überlagertes Bild aufweist, wobei das überlagerte Bild eine Anordnung von Darstellungen von benutzerauswählbaren Optionen (a - y in den Figuren 9A und 9B) umfasst, wobei jede Option anzeigt, ob sie ausgewählt worden ist;
Erfassen einer Änderung in einem Projektionsbereich des Projektionsbildes auf der Basis des Videosignals;
Verändern einer Projektionsposition des überlagerten Bildes gemäß der Änderung im Projektionsbereich des Projektionsbildes;
und Umordnen der Positionen der Darstellungen der benutzerauswählbaren Optionen in der Anordnung, als Teil des Vorgangs zum Verändern der Projektionsposition des überlagerten Bildes, um so die Verlagerung einer ausgewählten der Optionen, aus ihrer Ausgangsposition bis zu ihrer geänderten Position im Projektionsbild, zu minimieren.

7. Computerlesbares Aufzeichnungsmedium, das ein Programm speichert, welches, wenn es von einem Projektor (110) ausgeführt wird, den Projektor (110) veranlasst, das Verfahren zum Steuern eines Projektionsbildes nach Anspruch 6 auszuführen.

## Revendications

1. Projecteur (110) comprenant :
une unité de projection d'image superposée (300, 301, 303) configurée de manière à projeter une image de projection générée sur la base d'un signal vidéo, l'image de projection présentant une image superposée prédéterminée superposée à celle-ci, dans lequel l'image superposée comprend une matrice de représentations d'options sélectionnables par l'utilisateur (a - y dans les figures 9A et 9B), dont chacune est indicative du fait qu'elle a été sélectionnée ou non ; et
un contrôleur de signal (304) configuré de manière à détecter une variation de la zone de projection de l'image de projection sur la base du signal vidéo ;
dans lequel l'unité de projection d'image superposée (300, 301, 303) est configurée de manière à modifier la position de projection de l'image superposée selon la variation de la zone de projection de l'image de projection détectée par le contrôleur de signal (304), et à réordonner les positions de représentations des options sélectionnables par l'utilisateur dans la matrice, dans le cadre du processus de modification de la position de projection de l'image superposée, de manière à minimiser le déplacement d'une option sélectionnée parmi les options, de sa position initiale à sa position modifiée dans l'image de projection.

2. Projecteur selon la revendication 1, dans lequel la matrice comprend des lignes et des colonnes des représentations, et dans lequel l'unité de projection d'image superposée (300, 301, 303) est configurée de manière à réordonner les positions des représentations en effectuant un tri en unités de lignes ou de colonnes.

3. Projecteur selon la revendication 1, dans lequel l'unité de projection d'image superposée (300, 301, 303) est configurée de manière à trier les représentations des options non sélectionnées, de sorte qu'est maintenu l'ordre de toutes les options, de la partie supérieure gauche à la partie inférieure droite de la matrice.

4. Projecteur selon l'une quelconque des revendications 1 à 3, dans lequel l'unité de projection d'image superposée (300, 301, 303) est configurée de manière à modifier la position de projection et à minimiser le déplacement de l'option sélectionnée sur la base de positions de coordonnées dans l'image de projection.

5. Projecteur (110) selon l'une quelconque des revendications 1 à 4, dans lequel le contrôleur de signal (304) est configuré de manière à détecter la variation de la zone de projection de l'image de projection en réponse à une modification de la résolution de l'image de projection, à une modification du rapport d'aspect de l'image de projection, ou à un agrandissement de l'image de projection.

6. Procédé de commande d'une image de projection, comprenant les étapes ci-dessous consistant à :
projeter une image de projection générée sur la base d'un signal vidéo, l'image de projection présentant une image superposée prédéterminée superposée à celle-ci, dans lequel l'image superposée comprend une matrice de représentations d'options sélectionnables par l'utilisateur (a - y dans les figures 9A et 9B), dont chacune est indicative du fait qu'elle a été sélectionnée ou non ;
détecter une variation de la zone de projection de l'image de projection sur la base du signal vidéo ;
modifier une position de projection de l'image superposée selon la variation de la zone de projection de l'image de projection ; et
réordonner les positions de représentations des options sélectionnables par l'utilisateur dans la matrice, dans le cadre du processus de modification de la position de projection de l'image superposée, de manière à minimiser le déplacement d'une option sélectionnée parmi les options, de sa position initiale à sa position modifiée dans l'image de projection.

7. Support d'enregistrement lisible par ordinateur stockant un programme qui, lorsqu'il est exécuté par un projecteur (110), amène le projecteur (110) à mettre en oeuvre le procédé de commande de projection d'image selon la revendication 6.
